# EUROPÄISCHE PATENTANMELDUNG

(11) **EP 1 335 118 A2**
(43) Veröffentlichungstag der Anmeldung: **13.08.2003**
(21) Anmeldenummer: 03000996.3
(22) Anmeldetag: 17.01.2003
(51) Int. Cl.: F01N 3/023, F02D 19/00, F02D 41/02

(54) **Verfahren sowie Vorrichtung zur Behandlung von Dieselabgas**

(30) Priorität: 09.02.2002 DE 10205380
(71) Anmelder: DaimlerChrysler AG, 70567 Stuttgart (DE)
(72) Erfinder: Braun, Tillmann, 73663 Berglen (DE); Ebelsheiser, Oliver, 70469 Stuutgart (DE); Krutzsch, Bernd, Dr., 73770 Denkendorf (DE); Marquardt, Klaus-Jürgen, 73630 Remshalden (DE); Weibel, Michel, Dr., 70619 Stuttgart (DE); Wenninger, Günter, 70599 Stuttgart (DE)

(57) **Zusammenfassung**

Bei einem erfindungsgemässen Verfahren zur Verbrennung von abgelagerten Russteilchen in einem Partikelfilter einer Abgasvorrichtung eines Dieselmotors ist zum einen auf bekannte Art und Weise ein Katalysator zur Erzeugung von NO₂ aus dem Abgas vorhanden. Durch dieses NO₂ wird die Zündtemperatur von Russ so weit abgesenkt, dass er bei normaler Abgastemperatur verbrennt. Des weiteren ist eine Zugabe von Kraftstoff-Additiv vorgesehen, durch die ebenfalls eine Absenkung der Zündtemperatur des Russes möglich ist. Erfindungsgemäss wird der Schwefelgehalt im Kraftstoff ermittelt und davon abhängig eines der beiden Verfahren, entweder die Erzeugung von NO₂ oder die Zugabe von Additiv, angewandt. Dies erfolgt bevorzugt automatisch. Zur Ermittlung des Schwefelgehalts kann beispielsweise ein Schwefelsensor im Tank verwendet werden.

## Beschreibung

Die Erfindung betrifft ein Verfahren sowie eine Vorrichtung zum Entfernen von Teilchen, welche auf einem in einem Abgassystem einer Dieselverbrennungsmaschine angeordneten Filter abgelagert sind, durch Verbrennen.

Zur Reduzierung von schädlichen Abgasen von Dieselverbrennungsmaschinen, insbesondere von Russpartikeln, werden im Abgassystem Filter, insbesondere Russfilter, eingesetzt. Diese weisen das Problem auf, dass sie durch die grossen Mengen anfallenden Russes schnell verstopft und somit wirkungslos werden. Aus diesem Grunde ist es gewünscht, den Russ auf solchen Filtern durch Oxidieren bzw. Verbrennen zu beseitigen.

Aus der EP 341 832 ist es bekannt, im Abgas NO₂ aus NOenthaltendem Abgas durch einen Platinkatalysator zu bilden. Durch dieses NO₂ ist es möglich, Russ bei einer Temperatur von weniger als 400°C, also bei der normalen Abgastemperatur, zu verbrennen. Hierbei besteht das Problem, dass der Dieselkraftstoff einen sehr niedrigen Schwefelgehalt aufweisen muss. Ansonsten wird der Katalysator vergiftet und der Russ in dem Filter kann nicht mehr wie vorgesehen verbrannt werden. Schwefelhaltiger Kraftstoff ist jedoch nicht überall erhältlich, was insbesondere Lastwagen mit internationalem Einsatzbereich betrifft.

Aus der US-PS 5,522,905 ist es bekannt, dem Kraftstoff einer Dieselverbrennungsmaschine bestimmte Additive zuzugeben. Dadurch wird die Zündtemperatur von dem Russ im Filter derart herabgesetzt, dass bei üblichen Abgastemperaturen eine Verbrennung möglich ist. Diese Additive enthalten u.a. Metallsalze einer organischen Verbindung. Hierbei besteht das Problem, dass die Additive kostenintensiv sind.

Der Erfindung liegt die Aufgabe zugrunde, ein eingangs genanntes Verfahren sowie eine Vorrichtung zu schaffen, mit denen die Beseitigung von Russ eines Filters einer Dieselverbrennungsmaschine unter vielfältigen Bedingungen ökonomisch und ökologisch sinnvoll möglich ist. Insbesondere soll das Verfahren sowie die Vorrichtung auch gegen fehlerhafte Handhabung geschützt sein.

Diese Aufgabe wird gelöst durch ein Verfahren mit den Merkmalen des Anspruchs 1 sowie eine Vorrichtung mit den Merkmalen des Anspruchs 13. Vorteilhafte sowie bevorzugte Ausgestaltungen der Erfindung sind Gegenstand der weiteren Ansprüche und werden im folgenden näher erläutert. Der Inhalt der Ansprüche wird durch ausdrückliche Bezugnahme zum Inhalt der Anmeldung gemacht.

Erfindungsgemäss weist ein Verfahren zwei mögliche Verfahrensschritte a) oder b) auf. Bei dem ersten Verfahrensschritt a) wird NO-enthaltendes Abgas vor dem Filter über einen Katalysator, beispielsweise einen Oxidationskatalysator, geleitet. Dabei wird NO im Abgas zu NO₂ umgewandelt, welches anschließend zum Verbrennen der auf dem Filter abgelagerten Teilchen verwendet wird. Dabei wird eine derartige Menge an NO₂ gebildet, die ausreichend ist, die Verbrennung der Teilchen bei einer Temperatur von weniger als 400°C, insbesondere der normalen Abgastemperatur, durchzuführen. Für Details hierzu wird ausdrücklich Bezug genommen auf die EP 341 832, deren Inhalt hiermit zum Inhalt der Beschreibung gemacht wird.

Der andere Verfahrensschritt b) besteht darin, dass dem Kraftstoff ein Additiv zugegeben werden kann. Dieses enthält ein Metallsalz einer organischen Verbindung, wodurch die Zündtemperatur der auf dem Filter abgelagerten Teilchen unterhalb der normalen Zündtemperatur der Teilchen abgesenkt wird, insbesondere auf die normale Abgastemperatur.

Des weiteren wird erfindungsgemäss der Schwefelgehalt im Kraftstoff ermittelt, um davon abhängig jeweils den einen oder den anderen Verfahrensschritt durchzuführen. Liegt der Schwefelgehalt niedriger als ein vorgegebener Schwefelgehalt, so wird der Verfahrensschritt a), also das Erzeugen von NO₂, durchgeführt. Liegt der Schwefelgehalt dagegen höher als ein vorgegebener Schwefelgehalt, so wird der Verfahrensschritt b), also die Additivzugabe, durchgeführt. Dabei kann zwar das Erzeugen von NO₂ grundsätzlich noch nebenher laufen. Da aber der Katalysator in der Regel durch den hohen Schwefelgehalt deaktiviert ist, wird kaum NO₂ erzeugt werden.

Dies hat den Vorteil, dass das Vergiften des Katalysators sich nicht negativ auf die Russanlagerung auf dem Filter auswirkt, sondern trotzdem eine Verbrennung des Russes bzw. der Teilchen erfolgt. Wenn zur Findung dieser Entscheidung der Schwefelgehalt gemessen wird, also der Gehalt jenes Stoffes, der den Katalysator vergiftet bzw. deaktiviert, so erhält man eine genaue Aussage über dessen Funktionsfähigkeit bzw. die Möglichkeit des Durchführens von Verfahrensschritt a).

Vorteilhaft wird jeweils nur einer der beiden Verfahrensschritte durchgeführt. Besonders vorteilhaft wird grundsätzlich der Verfahrensschritt a), also die Erzeugung von NO₂, durchgeführt. Der Verfahrensschritt b) wird dann ausschliesslich bei Überschreiten des vorgegebenen Schwefelgehalts durchgeführt.

Es ist möglich und sogar im Sinne einer vereinfachten Abgasführung vorteilhaft, auch bei Durchführung des Verfahrensschritts b) den Abgasstrom über den Katalysator gemäss Verfahrensschritt a) zu leiten. Allerdings wird, da Verfahrensschritt b) nur bei zu hohem Schwefelgehalt angewandt wird, durch eben diesen Schwefelgehalt der Katalysator inaktiviert und Verfahrensschritt a) ausgesetzt.

Zur Ermittlung des Schwefelgehalts im Kraftstoff gibt es verschiedene Möglichkeiten. Einerseits kann der Abgasgegendruck stromaufwärts des Filters gemessen werden. Liegt der Schwefelgehalt zu hoch, wird der Katalysator vergiftet und dessen NO₂-Bildungsfunktion ist vermindert oder versagt. Dies hat einen Anstieg des Abgasgegendrucks zur Folge, da der durch NO₂ bewirkte Rußabbrandvorgang gestört ist und das Filter zusetzt. So kann das Überschreiten eines bestimmten Abgasgegendrucks als Überschreiten eines vorgegebenen Schwefelgehalts gewertet werden. Aus der Höhe des Überschreitens des Abgasgegendrucks kann die Höhe des Schwefelgehalts zumindest ansatzweise bestimmt werden.

Gemäss einer alternativen oder zusätzlichen Möglichkeit kann der Schwefelgehalt im Kraftstoff, insbesondere in der Kraftstoffzufuhr zu der Verbrennungsmaschine, ermittelt werden. Dies kann beispielsweise mit einem Schwefelsensor erfolgen. Einerseits kann dies in einem den Kraftstoff enthaltenden Tank erfolgen. Andererseits kann eine solche Ermittlung in einer Kraftstoffzuleitung zu der Verbrennungsmaschine selber vorgenommen werden. Eine solche Messung erfolgt vorteilhaft unabhängig von einer Kraftstoffdurchmischung bei mehreren, unterschiedlichen Kraftstoffbetankungen.

Es ist möglich, die Ermittlung des Schwefelgehalts in Intervallen mit jeweils bestimmten Zeitabständen vorzunehmen. Dadurch kann Aufwand eingespart werden. Mindestens bei jedem Tankvorgang sollte eine Ermittlung des Schwefelgehalts von neuem vorgenommen werden. Nur durch die Art der Betankung kann sich der Schwefelgehalt im vorgegebenen Kraftstoff ändern. Hierbei ist es denkbar, durch einen entsprechenden Sensor an einem Tankdeckel, am Füllstandsmesser oder dergleichen einen Tankvorgang zu erkennen und eine Messung des Schwefelgehalts auszulösen.

Alternativ ist es möglich, den Schwefelgehalt im Kraftstoff laufend zu ermitteln. Dies ermöglicht eine genaue Feststellung des tatsächlichen Ist-Zustandes. Eine solche Ermittlung kann in einem Kraftstofftank oder einer Kraftstoffzuleitung erfolgen.

Die Zugabe von Additiv nach Verfahrensschritt b) kann gemäss einer Ausführungsmöglichkeit der Erfindung dosiert erfolgen. Die Dosierung erfolgt bevorzugt in Abhängigkeit von dem Überschreiten des vorgegebenen Schwefelgehalts. So wird einerseits nicht zu wenig und andererseits nicht zu viel Additiv verwendet.

Bei der Zugabe des Additivs gibt es wiederum mehrere Möglichkeiten, ähnlich den Messungen des Schwefelgehalts. Grundsätzlich ist es möglich, Additiv einmal pro Tankvorgang in den Tank zu dem Kraftstoff zuzugeben. Die hierfür erforderliche Menge kann aus Schwefelgehalt sowie Tankinhalt bzw. Betankungsmenge ermittelt werden.

Gemäss einer weiteren Möglichkeit kann das Additiv ebenso diskontinuierlich, aber pro Tankvorgang mehrfach zu dem Kraftstoff zugegeben werden. Dies ermöglicht beispielsweise eine diskontinuierliche Verbrennung von auf dem Filter abgelagerten Teilchen in Intervallen. So wird nicht permanent Additiv zugegeben.

Schliesslich ist es auch möglich, das Additiv im wesentlichen kontinuierlich zu dem Kraftstoff zuzugeben. Dies erfolgt vorteilhaft in eine Kraftstoffleitung zur Verbrennungsmaschine. Hier ist es möglich, jeweils laufend den Schwefelgehalt zu messen und daraufhin abgestimmt das Additiv zu dosieren.

Zusätzlich zu einem Metallsalz einer organischen Verbindung kann das Additiv ein alkalisches Metallsalz aus der Gruppe der Seltenerdmetalle aufweisen. Besonders vorteilhaft sind diese beiden Metallverbindungen die einzigen Metallverbindungen in dem Additiv. Bezüglich weiterer Details, insbesondere möglicher Zusammensetzungen des Additivs, wird auf die oben angeführte US-PS 5,522,905 verwiesen, deren Inhalt hiermit zum Inhalt der Beschreibung gemacht wird.

Die erfindungsgemässe Vorrichtung zeichnet sich dadurch aus, dass sie eine Abgasableitung mit einem Filter und einem vor dem Filter angeordneten Katalysator aufweist. Der Katalysator ist dabei zur Erzeugung von NO₂ aus NO im Abgas ausgebildet. Es sind Additiv-Zugabemittel vorgesehen, um ein Additiv in den Kraftstoff zuzugeben. Des weiteren sind Schwefelgehalt-Messmittel vorgesehen zur Ermittlung des Schwefelgehalts im Kraftstoff. Mit dieser Vorrichtung kann besonders vorteilhaft das zuvor beschriebene Verfahren durchgeführt werden. Der Mehraufwand gegenüber herkömmlichen Vorrichtungen hält sich dabei in Grenzen.

Als Katalysator kann ein Platinkatalysator vorgesehen sein, insbesondere mit einem Wabenmonolith. Die Additiv-Zugabemittel können mit einem Tank oder vorteilhaft mit einer Kraftstoffzufuhr bzw. einer Kraftstoffleitung zu der Verbrennungsmaschine verbunden sein. Sie können einen Additiv-Vorrat beispielsweise in einem Vorratsbehälter, aufweisen. Des weiteren ist eine Ventileinrichtung vorgesehen, mittels welcher die Dosierung erfolgt. Bezüglich des Aufbaus wird auf die oben erwähnte EP 341 832 verwiesen.

Die Schwefelgehalt-Messmittel können einerseits eine Druckmesseinrichtung aufweisen, beispielsweise Gasdrucksensoren. Diese können in dem Abgassystem stromaufwärts des Filters angeordnet sein und das Ansteigen des Abgasgegendrucks über einen bestimmten vorgegebenen Wert registrieren.

Alternativ oder zusätzlich können die Schwefelgehalt-Messmittel einen Schwefelsensor aufweisen. Dieser sollte in der Kraftstoffzufuhr vor der Verbrennungsmaschine angeordnet sein, entweder in einer Kraftstoffleitung oder einem Kraftstofftank.

Des weiteren ist vorteilhaft eine Steuerung vorgesehen, welche in Abhängigkeit von dem durch die Schwefelgehalt-Messmittel festgestellten Zustand bzw. Schwefelgehalt die Zugabe von Additiv veranlasst.

Erfolgt der Übergang von Verfahrensschritt a) als grundsätzlich angewandtem Verfahrensschritt zu dem Verfahrensschritt b) in einer Ausnahmesituation im wesentlichen automatisch, so wird jederzeit eine Verbrennung der Teilchen in dem Filter gewährleistet. Dies gilt sowohl für Fälle, in denen kein schwefelhaltiger Kraftstoff verfügbar ist als auch für solche Fälle, in denen aus Versehen oder ohne genaues Wissen Kraftstoff mit einem zu hohen Schwefelgehalt getankt wird. Somit ist es nicht von einer Bedienperson abhängig, auf welche Art und Weise die Verbrennung der Teilchen erfolgt.

### Figurenbeschreibung

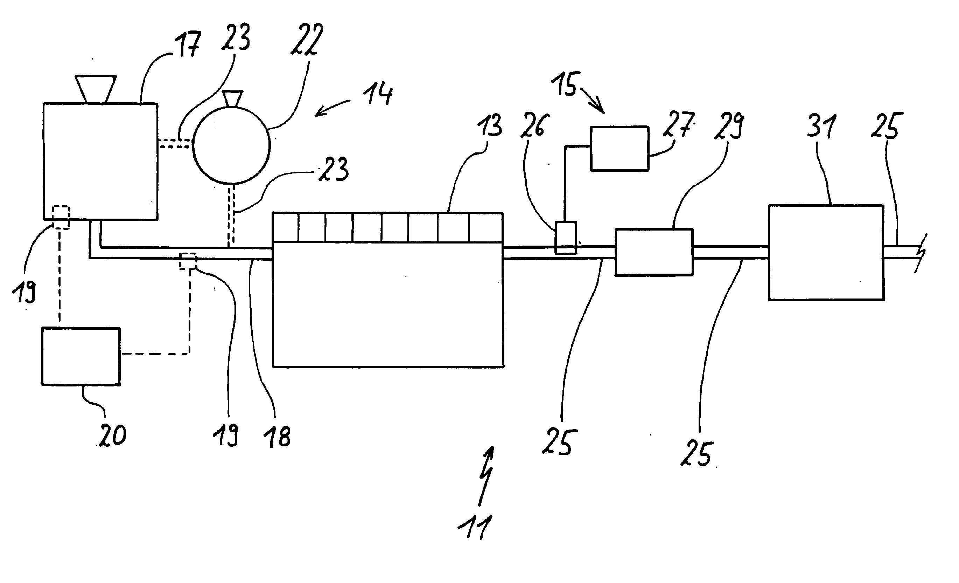

Die Figur zeigt eine schematische Darstellung des Aufbaus einer erfindungsgemässen Abgasvorrichtung einer Diesel-Verbrennungsmaschine.

Anhand der stark schematisierten Darstellung in der Figur sollen ein möglicher Aufbau einer Abgasvorrichtung sowie mögliche Verfahrensabläufe gemäss einem oder mehrerer Aspekte der Erfindung erläutert werden. Auch an dieser Stelle wird zum besseren Verständnis der Erfindung auf die zuvor erwähnten Druckschriften ausdrücklich Bezug genommen.

Die Vorrichtung 11 weist eine Verbrennungsmaschine in Form eines Dieselmotors 13 sowie einerseits eine Kraftstoffversorgung 14 und andererseits eine Abgasentsorgung 15 auf.

Die Kraftstoffversorgung 14 besteht aus einem Tank 17 und einer Kraftstoffleitung 18, welche zu dem Dieselmotor 13 führt. Dargestellt sind Schwefelsensoren 19 mit einem Schwefelmessgerät 20. Ein Schwefelsensor 19 kann, wie gestrichelt dargestellt, entweder in dem Tank 17 oder in der Kraftstoffleitung 18 angeordnet sein. Dies hängt im wesentlichen davon ab, ob der Schwefelgehalt des Kraftstoffs, welcher dem Dieselmotor 13 zugeführt wird, kontinuierlich (dann in der Kraftstoffleitung 18) oder diskontinuierlich (dann in dem Tank 17) gemessen werden soll.

Des weiteren ist ein Additiv-Vorratsbehälter 22 dargestellt, welcher das Additiv zur Zugabe zu dem Kraftstoff enthält. Dargestellt sind wieder gestrichelt zwei Möglichkeiten von Additiv-Zuführungen 23. Diese können einerseits in den Tank 17 führen zur Vermischung einer grösseren Menge Additivs mit dem darin enthaltenen Kraftstoff. Zum anderen kann eine Additiv-Zuführung 23 in die Kraftstoffleitung 18 führen. Diese Möglichkeit sollte dann gewählt werden, wenn Additiv kontinuierlich oder in mehreren Intervallen zugegeben werden soll.

Die Abgasentsorgung 15 besteht im wesentlichen aus einer Abgasleitung 25, die von dem Dieselmotor 13 wegführt. Hinter dem Dieselmotor 13 weist sie als eine weitere Möglichkeit zur Bestimmung des Schwefelgehalts im Kraftstoff einen Abgasdrucksensor 26 sowie eine zugehörige Abgasdruckmesseinrichtung 27 auf. Der Abgasdrucksensor 26 dient dazu, den Abgasgegendruck stromaufwärts des Filters 31 zu ermitteln. Daraus wird indirekt, wie zuvor eingehend beschrieben, ein zu hoher Schwefelgehalt des Kraftstoffs ermittelt.

Hinter dem Katalysator 29, der zur Umwandlung von NO im Abgas zu NO₂ ausgebildet ist, ist ein Partikelfilter 31 angeordnet. Dieser dient dazu, Russteilchen aus dem Abgas zu filtern. Mittels des erfindungsgemässen Verfahrens sowie der erfindungsgemässen Vorrichtung kann dieser Partikelfilter 31 in bestimmten zeitlichen Abständen oder im wesentlichen kontinuierlich von angelagertem Russ durch Verbrennen befreit werden. Hinter dem Partikelfilter 31 führt die Abgasleitung 25 weiter zu bekannten Auspuffanlagen oder dergleichen.

Wie zuvor bereits erläutert, sind zum einen aus der Zeichnung drei verschiedene Arten bzw. Anbringungsorte für die Ermittlung des Schwefelgehalts des Kraftstoffs ersichtlich. Eine direkte Messung des Schwefelgehalts im Kraftstoff kann im Tank 17 oder in der Kraftstoffleitung 18 vor dem Dieselmotor 13 stattfinden. Da in der Regel der Tank 17 in Intervallen, meistens kurz vor der völligen Entleerung, betankt wird, kann ein Tankvorgang zur Intervallbestimmung verwendet werden. Dies kann durch Sensoren, entweder am Tankdeckel oder an einer Füllstandsmesseinrichtung, ermittelt werden.

Wird beispielsweise Kraftstoff mit hohem Schwefelgehalt zu Kraftstoff mit geringem Schwefelgehalt zugetankt, so entsteht ein Gemisch mit einem Gesamtschwefelgehalt. Dieser kann zu hoch liegen für die einwandfreie Funktion des Katalysators. Es kann davon ausgegangen werden, dass die Durchmischung einigermassen homogen erfolgt und somit auch ein Schwefelsensor 19 in dem Tank 17 eine Aussage über den tatsächlichen Schwefelgehalt ermöglicht.

Wird ein Schwefelsensor 19 dagegen in der Kraftstoffleitung 18 selber angeordnet, kann und sollte eine kontinuierliche oder mit kurzen Zeitabständen versehene Messung durchgeführt werden, um damit jeweils zu bestimmen, was für eine Art Kraftstoff bzw. mit welchem Schwefelgehalt dem Dieselmotor 13 zugeführt wird. Davon abhängig können dann jeweils Massnahmen wie Zugabe und Dosierung von Additiv aus dem Additiv-Vorratsbehälter 22 erfolgen.

Eine Messung des Abgasdrucks in der Abgasleitung 25 stromaufwärts des Filters 31 mittels des Abgasdrucksensors 26 ist dagegen eine indirekte Messmethode für den Schwefelgehalt des Kraftstoffs. Hier wird direkt die störende Wirkung eines zu hohen Schwefelgehalts, nämlich das Vergiften des Katalysators 29 und somit der Anstieg des durch diesen verursachten Abgasgegendrucks, gemessen. Dies kann in bestimmten Situationen vorteilhaft gegenüber einer Messung des Schwefelgehalts direkt im Kraftstoff sein. Eine Wahl zwischen einer direkten Schwefelgehaltsmessung und einer indirekten Methode wie der Ermittlung über den Abgasgegendruck kann davon abhängig gemacht werden, welche Sensoren preisgünstiger, robuster oder auf andere Weise vorteilhaft sind.

Die Zugabe von Additiv aus dem Additiv-Vorratsbehälter 22 mittels der Additiv-Zuführung 23 kann, ähnlich wie der Schwefelsensor 19, entweder in den Tank 17 direkt oder in die Kraftstoffleitung 18 vorgesehen sein. Eine Zugabe von Additiv in den Tank 17 sollte im wesentlichen in den Tankvorgängen entsprechenden Intervallen erfolgen. Somit kann eine Mischung von Kraftstoff mit bestimmtem Schwefelgehalt und der entsprechenden Additiv-Zugabe erreicht werden.

Eine Zugabe von Additiv in die Kraftstoffleitung direkt sollte dagegen im wesentlichen kontinuierlich oder mit kurzen Zeitabständen erfolgen. Diese Zugabe kann jeweils direkt oder laufend dem aktuellen Schwefelgehalt des Kraftstoffes angepasst sein.

Schliesslich ist es noch möglich, zusätzlich zu den bisher beschriebenen erfindungsgemässen Massnahmen mittels innermotorischer Massnahmen die Abgastemperatur zu erhöhen. Auch damit kann eine Verbrennung von Russ in dem Partikelfilter 31 erreicht werden. Allerdings wird hier nicht die Zündtemperatur des Russes abgesenkt, um sie mit den normalen Abgastemperaturen zur Russverbrennung zu erreichen. Hier wird die Abgastemperatur selber erhöht, um die normale Zündtemperatur von Russ zu erreichen. Solche innermotorischen Massnahmen können in der Beeinflussung von Abgaserzeugung bzw. Dosierung des Kraftstoffs in dem Dieselmotor 13 bestehen. Eingeleitet werden können solche innermotorischen Massnahmen in solchen Fällen, in denen die anderen Verfahren wie NO₂-Erzeugung oder Additiv-Zugabe nicht reichen, um den Partikelfilter 31 von Russ freizubrennen. Dies kann beispielsweise durch Drucksensoren oder dergleichen vor dem Partikelfilter 31 ermittelt werden. Diese können melden, wenn der Partikelfilter 31 zu stark mit Russ zugesetzt und somit quasi beinahe verstopft ist.

## Patentansprüche

1. Verfahren zum Entfernen von Teilchen, welche auf einem in einem Abgassystem (15) einer mit Kraftstoff betriebenen Verbrennungsmaschine (13) angeordneten Filter (31) abgelagert sind, durch Verbrennen, wobei
a) NO-enthaltendes Abgas vor dem Filter (31) über einen Katalysator (29) geleitet wird, um das NO im Abgas zu NQ₂ umzuwandeln, und anschließend das NO₂ enthaltende Abgas zum Verbrennen der auf dem Filter abgelagerten Teilchen verwendet wird, wobei die Menge an zu NO₂ umgewandeltem NO ausreicht, es zu ermöglichen, die Verbrennung der Teilchen bei einer Temperatur von weniger als 400°C durchzuführen, oder
b) dem Kraftstoff ein Additiv zugegeben wird, welches ein Metallsalz einer organischen Verbindung enthält zur Reduzierung der Zündtemperatur der auf dem Filter (31) abgelagerten Teilchen unterhalb der normalen Zündtemperatur der Teilchen,
wobei der Schwefelgehalt im Kraftstoff ermittelt wird und in einer Betriebsart bei einem Schwefelgehalt niedriger als einem vorgegebenen Schwefelgehalt der Verfahrensschritt a) durchgeführt wird und bei einem Schwefelgehalt höher als dem vorgegebenen Schwefelgehalt der Verfahrensschritt b) durchgeführt wird.

2. Verfahren nach Anspruch 1, **dadurch gekennzeichnet, dass** der Verfahrensschritt a) der grundsätzlich verwendete Verfahrensschritt ist und der Verfahrensschritt b) ausschliesslich bei Überschreiten des vorgegebenen Schwefelgehalts anstelle von oder zusätzlich zu Verfahrensschritt a) durchgeführt wird.

3. Verfahren nach Anspruch 1 oder 2, **dadurch gekennzeichnet, dass** zur Ermittlung des Schwefelgehalts im Kraftstoff der Abgasgegendruck stromaufwärts des Filters (31) gemessen wird, wobei vorzugsweise das Überschreiten eines bestimmten Abgasgegendrucks als Überschreiten eines vorgegebenen Schwefelgehalts gewertet wird.

4. Verfahren nach einem der vorhergehenden Ansprüche, **dadurch gekennzeichnet, dass** der Schwefelgehalt in der Kraftstoffzufuhr (14) zu der Verbrennungsmaschine (13) ermittelt wird, wobei er vorzugsweise in einem den Kraftstoff enthaltenden Tank (17) ermittelt wird.

5. Verfahren nach einem der vorhergehenden Ansprüche, **dadurch gekennzeichnet, dass** die Ermittlung des Schwefelgehalts mindestens in Intervallen mit bestimmten Zeitabständen erfolgt, wobei vorzugsweise mindestens bei jedem Tankvorgang der Schwefelgehalt ermittelt wird.

6. Verfahren nach einem der vorhergehenden Ansprüche, **dadurch gekennzeichnet, dass** der Schwefelgehalt im Kraftstoff im wesentlichen laufend ermittelt wird.

7. Verfahren nach einem der vorhergehenden Ansprüche, **dadurch gekennzeichnet, dass** die Zugabe des Additivs dosiert erfolgt, wobei sie vorzugsweise in Abhängigkeit von dem Überschreiten des vorgegebenen Schwefelgehalts dosiert wird.

8. Verfahren nach einem der vorhergehenden Ansprüche, **dadurch gekennzeichnet, dass** das Additiv pro Tankvorgang einmal in den Tank (17) zu dem Kraftstoff zugegeben wird.

9. Verfahren nach einem der vorhergehenden Ansprüche, **dadurch gekennzeichnet, dass** das Additiv diskontinuierlich zu dem Kraftstoff zugegeben wird zur diskontinuierlichen Verbrennung von auf dem Filter (31) abgelagerten Teilchen.

10. Verfahren nach einem der Ansprüche 1 bis 8, **dadurch gekennzeichnet, dass** das Additiv im wesentlichen kontinuierlich zu dem Kraftstoff in die Zufuhr (14) zu der Verbrennungsmaschine (13) zugegeben wird, vorzugsweise in eine Kraftstoffleitung (18) von einem Kraftstofftank (17) zu der Verbrennungsmaschine (13).

11. Verfahren nach einem der vorhergehenden Ansprüche, **dadurch gekennzeichnet, dass** der Katalysator (29) ein Metall aus der Platingruppe aufweist.

12. Verfahren nach einem der vorhergehenden Ansprüche, **dadurch gekennzeichnet, dass** das Additiv ein alkalisches Metallsalz aus der Gruppe der Seltenerdmetalle aufweist, insbesondere zusätzlich zu dem Metallsalz einer organischen Verbindung, wobei insbesondere diese beiden Metallverbindungen die einzigen Metallverbindungen in dem Additiv sind.

13. Abgasvorrichtung einer Verbrennungsmaschine für Kraftstoff, welche eine Abgasableitung (25) aufweist mit einem Filter (31) und einem vor dem Filter angeordneten Katalysator (29) zur Erzeugung von NO im Abgas zu NO₂, wobei Additiv-Zugabemittel (22, 23) vorgesehen sind zur Zugabe von Additiv in den Kraftstoff, und wobei Schwefelgehalt-Messmittel (19, 20; 26, 27) vorgesehen sind zur Ermittlung des Schwefelgehalts im Kraftstoff.

14. Vorrichtung nach Anspruch 13, **dadurch gekennzeichnet, dass** der Katalysator (29) ein Metall aus der Platingruppe aufweist, wobei er insbesondere ein Metall aus der Platingruppe auf einem Waben-Monolith aufweist.

15. Vorrichtung nach Anspruch 13 oder 14, **dadurch gekennzeichnet, dass** die Additiv-Zugabemittel mit einer Kraftstoffzufuhr (14) zu der Verbrennungsmaschine (13) verbunden sind.

16. Vorrichtung nach einem der Ansprüche 13 bis 15, **dadurch gekennzeichnet, dass** die Additiv-Zugabemittel (22, 23) mit einem Vorratsbehälter, insbesondere einem Tank (17), für den Kraftstoff verbunden sind.

17. Vorrichtung nach einem der Ansprüche 13 bis 16, **dadurch gekennzeichnet, dass** die Additiv-Zugabemittel (22, 23) einen mit einer Ventileinrichtung versehenen Additiv-Vorrat, insbesondere einen Vorratsbehälter (22), aufweisen.

18. Vorrichtung nach einem der Ansprüche 13 bis 17, **dadurch gekennzeichnet, dass** die Schwefelgehalt-Messmittel eine Druckmesseinrichtung (25, 26) aufweisen, welche in dem Abgassystem (15) stromaufwärts des Filters (31) angeordnet ist, insbesondere Gasdrucksensoren (26).

19. Vorrichtung nach einem der Ansprüche 13 bis 18, **dadurch gekennzeichnet, dass** die Schwefelgehalt-Messmittel einen Schwefelsensor (19) aufweisen, welcher in der Kraftstoffzufuhr (14) vor der Verbrennungsmaschine (13), insbesondere in einem Kraftstofftank (17), angeordnet ist.
